# EUROPÄISCHE PATENTANMELDUNG

(11) **EP 0 650 972 A1**
(43) Veröffentlichungstag der Anmeldung: **03.05.1995**
(21) Anmeldenummer: 94116236.4
(22) Anmeldetag: 14.10.1994
(51) Int. Cl.: C07F 9/38

(54) **Verfahren zur Herstellung von Alkanphosphonsäureanhydriden**

(30) Priorität: 30.10.1993 DE 4337190
(71) Anmelder: HOECHST AKTIENGESELLSCHAFT, D-65929 Frankfurt am Main (DE)
(72) Erfinder: Roscher, Günter, Dr., D-65779 Kelkheim (DE)

(57) **Zusammenfassung**

Verfahren zur Herstellung von Phosphonsäureanhydriden der allgemeinen Formel (I) 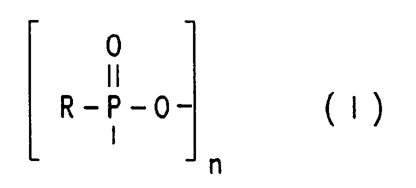
worin R (C₁-C₁₀)-Alkyl, das gegebenenfalls durch Alkylgruppen, Alkoxygruppen, Fluor-, Chlor- oder Bromatome, Nitrogruppen, Cyanogruppen, Trifluormethylgruppen, Phenylgruppen, wobei der Phenylrest wiederum Alkylgruppen, Alkoxygruppen, Fluor, Chlor, Bromatome, Nitrogruppen, Cyanogruppen oder Alkoxycarbonylgruppen tragen kann, substituiert sein kann, und n ≧ 3 bedeutet, indem man eine Phosphonsäure der allgemeinen Formel (II) 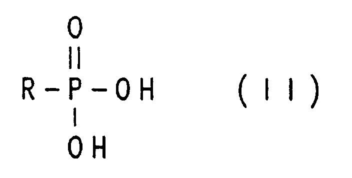
worin R die angegebene Bedeutung besitzt, mit Diketen, gegebenenfalls bei erhöhter Temperatur, umsetzt.

## Beschreibung

Die vorliegende Erfindung betrifft ein Verfahren zur Herstellung von Alkanphosphonsäureanhydriden.
Alkanphosphonsäureanhydride, wie z.B. Propanphosphonsäureanhydrid sind wertvolle Zwischenprodukte. Sie werden beispielsweise zur Herstellung von Flammschutzmitteln, zum Korrosionsschutz von Metallen, für die Komplexbildung von Metallen, zur Verknüpfung von Peptiden oder auch als Vernetzer für Polymere verwendet.

Zur Herstellung von Alkanphosphonsäureanhydriden sind unterschiedliche Methoden bekannt. Im allgemeinen wird dabei von der betreffenden Alkanphosphonsäure ausgegangen. Diese kann z.B. mit Phosphortrichlorid, Thionylchlorid oder Phosgen ins Phosphonsäuredichlorid übergeführt werden (DE-OS 2225545). Das Alkanphosphonsäuredichlorid kann entweder mit Alkanphosphonsäure oder auch der stöchiometrischen Menge Wasser zu Alkanphosphonsäureanhydrid umgesetzt werden (EP 154 83), wobei gleichzeitig Chlorwasserstoff entsteht. Eine andere bekannte Methode besteht in der Umanhydridisierung von Alkanphosphonsäure mit z.B. Essigsäureanhydrid (DE-OS 2758 580). Hierbei wird aus einem Gemisch von Alkanphosphonsäure und Essiganhydrid nach Rückflußerhitzen die entstehende Essigsäure laufend abdestilliert. Bei den über das Chlorid gehenden Methoden macht der Anfall von Chlorwasserstoff technische Schwierigkeiten.

Bei der Umanhydridisierung von Alkanphosphonsäureanhydriden erfordert die Reaktion wegen dem notwendigen Abdestillieren der gebildeten Essigsäure zur Einstellung des Gleichgewichts erheblichen Zeitaufwand, die Raumzeitausbeuten sind deshalb klein. Das benötigte Reaktionsvolumen ist ein Mehrfaches des gewonnenen Alkanphosphonsäureanhydrids, weil im allgemeinen mit Essigsäureanhydrid im Überschuß gearbeitet werden muß.

Es bestand somit ein großer Bedarf, ein Verfahren zu entwickeln, das die vorstehend genannten Nachteile vermeidet, und sich technisch ohne großen Aufwand realisieren läßt und zudem das gewünschte Phosphonsäureanhydrid in hoher Ausbeute ohne Bildung unerwünschter Nebenprodukte zugänglich macht.

Diese Aufgabe wird gelöst durch ein Verfahren zur Herstellung von Phosphonsäureanhydriden der allgemeinen Formel (I) 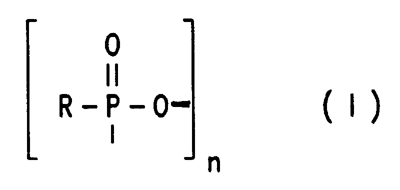
worin R (C₁-C₁₀)-Alkyl, das gegebenenfalls durch Alkylgruppen, Alkoxygruppen, Fluor-, Chlor- oder Bromatome, Nitrogruppen, Cyanogruppen, Trifluormethylgruppen, Phenylgruppen wobei der Phenylrest wiederum Alkylgruppen, Alkoxygruppen, Fluor, Chlor, Bromatome, Nitrogruppen, Cyanogruppen oder Alkoxycarbonylgruppen tragen kann, substituiert sein kann, und n ≧ 3 bedeutet, dadurch gekennzeichnet, daß man eine Phosphonsäure der allgemeinen Formel (II) 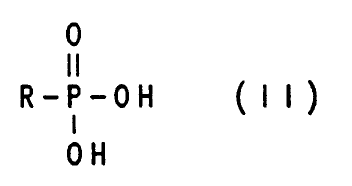
worin R die angegebene Bedeutung besitzt, mit Diketen gegebenenfalls bei erhöhter Temperatur umsetzt. 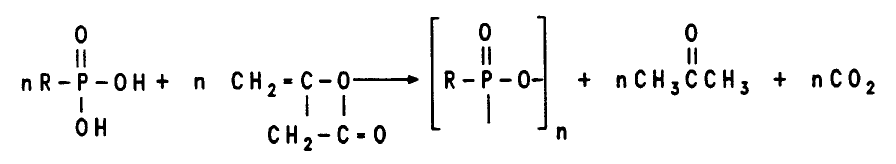
Besonders vorteilhaft an diesem Verfahren ist, daß als Nebenprodukte nur CO₂ und Aceton anfallen, die ökologisch unbedenklich und einfach zu entfernen sind.

Das Verfahren läßt sich vorteilhaft für Phosphonsäureanhydride der Formel I einsetzen, worin R C₁-C₁₀-Alkyl oder -Alkenyl bedeutet; n beträgt hierbei mindestens 3, insbesondere 5 - 100.
Von Bedeutung ist das Verfahren auch zur Herstellung von Ethanphosphonsäureanhydrid, Propanphosphonsäureanhydrid, Butanphosphonsäureanhydrid, Vinylphosphonsäureanhydrid.

Es hat sich in vielen Fällen bewährt, die Reaktion bei Temperaturen zwischen 50°C und 180°C, insbesondere 70°C und 150°C, bevorzugt 80°C und 120°C, durchzuführen.
Dabei hat es sich als günstig erwiesen, zur vorgelegten Alkanphosphonsäure Diketen zuzudosieren.
Das zugegebene Diketen setzt sich spontan um, was an der stöchiometrisch gebildeten CO₂-Menge und der abdestillierenden Acetonmenge erkennbar ist. Im allgemeinen wird mit stöchiometrischem Verhältnis Alkanphosphonsäure zu Diketen gearbeitet, ein geringer Diketenüberschuß ist in vielen Fällen von Vorteil. Es hat sich als günstig erwiesen 0,8 bis 3 Mol, insbesondere 0,9 bis 2 Mol, bevorzugt 1 bis 1,5 Mol Diketen pro Mol Phosphonsäure einzusetzen.

Die folgenden Beispiele sollen das Verfahren erläutern, ohne es jedoch zu beschränken.

### Apparatur:

Ölbad für Temperierung, 5 l-Dreihalskolben mit Rührer, Tropftrichter, Kondensator, Vorlage, Wasserwäsche zur Abgasreinigung, Gasuhr für Abgasmessung
NL bedeutet hierbei Gasmenge in Litern bezogen auf Normalbedingungen (0°C/1 atm).

### Beispiel 1

Im Kolben vorgelegt werden 3 kg Propanphosphonsäure. Die Kolbeninnentemperatur wird auf 120°C eingestellt. Aus dem Tropftrichter werden innerhalb 2 Stunden 2400 g Diketen gleichmäßig eingetropft. Mit Beginn der Diketenzugabe fällt hinter der Abwasserwäsche Abgas an. Etwa 5 Minuten nach Beginn der Diketenzufuhr beginnt Destillat in der Vorlage anzufallen. Die Abgasmenge entspricht molar der zugetropften Diketenmenge.

Hinter der Abgaswäsche fallen insgesamt 640 NL Gas an, das im wesentlichen aus CO₂ besteht. Als Destillat fallen 1080 g an. Das Destillat enthält > 95 % Aceton. Als Sumpf der Abgaswäsche fällt wäßrige Lösung an, die 350 g Aceton enthält.

Der Reaktionsrückstand, Menge 2800 g, enthält 8 % Aceton, 82 % Propanphosphonsäureanhydrid und 10 % nicht umgesetzte Propanphosphonsäure.

### Beispiel 2

Die Versuchsbedingungen und Einsatzmengen sind wie in Beispiel 1. Die Temperatur im Reaktionsgefäß wird jedoch auf 100°C eingestellt.

Wenn die Abgasmenge molar der zugetropften Diketenmenge entsprechen soll, muß mit verringerter Zulaufgeschwindigkeit des Diketens gearbeitet werden. Sei gleichmäßiger Diketenzugabe werden jetzt 3 1/2 Stunden benötigt.

Die angefallene Abgasmenge entspricht Beispiel 1. Als Destillat werden 860 g Aceton erhalten, im Sumpf der Abgaswäsche sind 350 g Aceton. Als Reaktionsrückstand verbleiben 3022 g, die 15 % Aceton, 75 % Propanphosphonsäureanhydrid und 10 % nicht umgesetzte Propanphosphonsäure enthalten.

### Beispiel 3

Versuchsbedingungen und Einsatzmengen sind wie in Beispiel 1 und 2.

Im Reaktionsgefäß wird eine Temperatur von 80°C eingestellt.

Wenn das Gleichgewicht zwischen Gasmenge und Diketenzufuhr eingesellt werden soll, muß die Diketenzulaufgeschwindigkeit weiter verringert werden. Die benötigte Reaktionszeit beträgt jetzt 5 Stunden. Die Abgasmenge ist entsprechend Beispiel 1 und 2. Die Acetondestillatmenge ist 453 g, im Sumpf der Abgaswäsche sind 350 g Aceton enthalten. Als Reaktionsrückstand verbleiben 3418 g, enthaltend 25 % Aceton, 66 % Propanphosphonsäureanhydrid und 8 % Propanphosphonsäure.

### Beispiel 4

Die Versuchsanordnung ist wie in Beispiel 1. Anstelle von 2400 g Diketen in Beispiel 1 werden nur 2235 g Diketen gleichmäßig innerhalb von 2 Stunden zudosiert.

Die Abgasmenge beträgt 590 NL, die Acetondestillatmenge 993 g, der Sumpf der Wasserwäsche enthält 325 g Aceton.

Als Reaktionssumpf verbleiben 2820 g der folgenden Zusammensetzung:
Aceton 8 %, Propanphosphonsäureanhydrid 76 %, Propanphosphonsäure 15 %.

### Beispiel 5

Die Versuchsanordnung ist wie in Beispiel 1. Anstelle von 2400 g Diketen wie in Beispiel 1 werden nur 2040 g Diketen gleichmäßig innerhalb von 2 Stunden zudosiert. Die Abgasmenge beträgt 540 NL. Als Acetondestillat fallen 885 g an, der Sumpf der Wasserwäsche enthält 298 g Aceton.

Als Reaktionssumpf verbleiben 2840 g der folgenden Zusammensetzung:
Aceton 8 %, Propanphosphonsäureanhydrid 73 %, Propanphosphonsäure 18 %.

## Patentansprüche

1. Verfahren zur Herstellung von Phosphonsäureanhydriden der allgemeinen Formel (I) 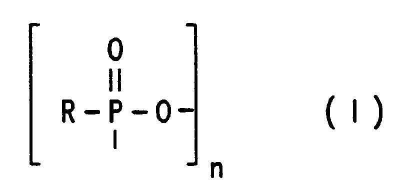 worin R (C₁-C₁₀)-Alkyl, das gegebenenfalls durch Alkylgruppen, Alkoxygruppen, Fluor-, Chlor- oder Bromatome, Nitrogruppen, Cyanogruppen, Trifluormethylgruppen, Phenylgruppen, wobei der Phenylrest wiederum Alkylgruppen, Alkoxygruppen, Fluor, Chlor, Bromatome, Nitrogruppen, Cyanogruppen oder Alkoxycarbonylgruppen tragen kann, substituiert sein kann, und n ≧ 3 bedeutet, dadurch gekennzeichnet, daß man eine Phosphonsäure der allgemeinen Formel (II) 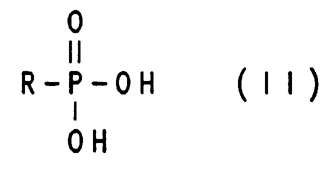 worin R die angegebene Bedeutung besitzt, mit Diketen, gegebenenfalls bei erhöhter Temperatur umsetzt.

2. Verfahren nach Anspruch 1, worin R C₁-C₁₀-Alkyl oder -Alkenyl, insbesondere Ethyl, Propyl, Butyl, Vinyl und n = 3 bis 100, insbesondere 5 bis 100, bedeutet.

3. Verfahren nach Anspruch 1 oder 2, dadurch gekennzeichnet, daß man die Umsetzung bei Temperaturen zwischen 50°C und 180°C, insbesondere 70°C bis 150°C, bevorzugt 80°C und 120°C durchführt.

4. Verfahren nach mindestens einem der Ansprüche 1 bis 3, dadurch gekennzeichnet, daß man die Alkanphosphonsäure vorlegt und das Diketen zudosiert.

5. Verfahren nach mindestens einem der Ansprüche 1 bis 4, dadurch gekennzeichnet, daß man 0,8 bis 3 Mol, insbesondere 0,9 bis 2 Mol, bevorzugt 1 bis 1,5 Mol Diketen pro Mol Phosphonsäure einsetzt.
